# EUROPEAN PATENT APPLICATION

(11) **EP 2 535 900 A1**
(43) Date of publication of application: **19.12.2012**
(21) Application number: 10845791.2
(22) Date of filing: 05.11.2010
(51) Int. Cl.: G21C 13/024, E04H 5/02, E04H 9/02

(54) **FOUNDATION FOR A BUILDING IN A NUCLEAR FACILITY AND NUCLEAR FACILITY**

(30) Priority: 09.02.2010 JP 2010026881
(71) Applicant: Mitsubishi Heavy Industries, Ltd., Tokyo 108-8215 (JP)
(72) Inventor: SATO, Kunihiko, Tokyo 108-8215 (JP); SAKURAI, Kenichi, Tokyo 108-8215 (JP)
(74) Representative: HOFFMANN EITLE
(86) International application number: PCT/JP2010/069727
(87) International publication number: WO 2011/099200

(57) **Abstract**

To provide a lower foundation 30 provided on a ground 7 and an upper foundation 31 provided above the lower foundation 30 via a seismic isolator 32. A machine room S in which a machine K can be arranged is provided in the upper foundation 31. A foundation-side hull structure unit that is configured in a reticular pattern by horizontal reinforcing ribs extended in one direction and vertical reinforcing ribs extended to cross the horizontal reinforcing ribs is provided in the upper foundation 31, and the machine room S is provided in a space in the foundation separated by the horizontal reinforcing ribs and the vertical reinforcing ribs.

## Description

### Field

The present invention relates to a foundation for a building in a nuclear facility that serves as a base of a building in a nuclear facility and to a nuclear facility. Background

Conventionally, there has been a containment as a building in a nuclear facility, and the containment is provided on a foundation. Patent Literature 1 describes a nuclear facility having a containment. This nuclear facility includes a containment and a machine room provided below the containment. In this case, a suppression pool is provided in the containment, and the suppression pool is positioned above the machine room.

### Citation List

### Patent Literature

Patent Literature 1: Japanese Patent Application Laid-open No. H10-282284

### Summary

### Technical Problem

In a conventional nuclear facility, a machine room and a containment are provided on a foundation. Specifically, the machine room is provided on the foundation and below the containment. Therefore, the machine room is provided between the foundation and the containment. As a result, in the conventional nuclear facility, the height of the containment increases because the machine room is provided on the foundation, thereby decreasing its quake resistance. Earthquake-proof (seismic isolation) designing of the nuclear facility is based on a surface (an upper surface) of the foundation having a sufficient rigidity, and as a barycentric position of the nuclear facility becomes higher with respect to the foundation, the quake resistance (seismic isolation property) decreases. Consequently, the conventional nuclear facility has a weak structure against vibrations such as earthquakes, because the barycentric position becomes higher with an increase in the height of the containment.

Therefore, an object of the present invention is to provide a foundation for a building in a nuclear facility that can downsize a building in a nuclear facility arranged on an upper surface of a foundation while ensuring the seismic isolation property and to provide a nuclear facility.

### Solution to Problem

According to an aspect of the present invention, a foundation for a building in a nuclear facility includes: a lower foundation provided on a ground; and an upper foundation provided above the lower foundation via a seismic isolator. A machine room in which a machine can be arranged is provided in the upper foundation.

According to this configuration, the machine room can be provided in the upper foundation. Therefore, a part of a plurality of machine rooms formed in a building in a nuclear facility provided on a foundation can be relocated to a machine room provided in the upper foundation. With this arrangement, the building in the nuclear facility can be downsized by the extent of relocating a part of the machine rooms. Furthermore, by providing the machine room in the upper foundation, the height of the building does not need to be high as in conventional techniques where the machine room is provided on the foundation. Accordingly, the building provided on the upper foundation can easily ensure the seismic isolation property.

Advantageously, in the foundation for a building in a nuclear facility, a hull structure unit that is configured in a reticular pattern by first reinforcing ribs extended in one direction and second reinforcing ribs extended to cross the first reinforcing ribs is provided in the upper foundation, and the machine room is provided in a space in a foundation separated by the first reinforcing ribs and the second reinforcing ribs.

According to this configuration, the machine room can be provided in a space in the foundation separated by the first reinforcing ribs and the second reinforcing ribs. Therefore, the machine room can be provided without degrading the structural strength of the upper foundation acquired by the hull structure unit.

Advantageously, in the foundation for a building in a nuclear facility, a lower surface of the upper foundation is flat in its entirety.

According to this configuration, by having the lower surface of the upper foundation flat, relocation of a building provided on the upper foundation can be facilitated.

According to another aspect of the present invention, a nuclear facility includes: any one of the foundation for a building in a nuclear facility described above; and a containment that serves as a building provided on the upper foundation.

According to this configuration, because a machine room can be provided in the upper foundation, a building provided on the upper foundation can be downsized, and the seismic isolation property of the building can be easily ensured.

Advantageously, in the nuclear facility, a water storage pit capable of storing cooling water is provided in the containment, a lifting pump capable of pumping the cooling water flown out from the water storage pit is provided as the machine in the machine room positioned below the water storage pit, and a first connecting pipe that connects the water storage pit and the lifting pump is further provided.

According to this configuration, because the lifting pump can be arranged in the machine room below the water storage pit, cooling water stored in the water storage pit can be favorably caused to flow out to the lifting pump. Furthermore, the first connecting pipe that connects the water storage pit and the lifting pump can be made short, thereby enabling to simplify an arrangement configuration of pipes.

Advantageously, in the nuclear facility, a reactor is provided in the containment, a feeding pump capable of feeding cooling water to the reactor is provided as the machine in the machine room positioned below the reactor, and a second connecting pipe that connects the reactor and the feeding pump is further provided.

According to this configuration, because the feeding pump can be arranged in the machine room below the reactor, the second connecting pipe that connects the reactor and the feeding pump can be made short, thereby enabling to simplify an arrangement configuration of pipes.

Advantageously, in the nuclear facility, a liner plate that covers an inner surface of an internal space separated by the upper foundation and the containment is provided in the containment, and the machine room is located outside the liner plate.

According to this configuration, the inside of the containment and the machine room can be separated by the liner plate. Therefore, it is possible to suppress the possibility such that, when the pressure inside the containment increases, air inside the containment flows into the machine room.

### Advantageous Effects of Invention

According to the foundation for a building in a nuclear facility and the nuclear facility of the present invention, a building provided on an upper foundation can be downsized by providing a machine room in the upper foundation, and the seismic isolation property can be easily ensured.

### Brief Description of Drawings

FIG. 1 is a sectional view of a nuclear facility to which a foundation according to an embodiment of the present invention is applied, where the nuclear facility is viewed from a side thereof.
FIG. 2 is a sectional view of the foundation shown in FIG. 1 as being cut along a line A-A' .
FIG. 3 is a partial sectional view of an area surrounded by a dotted line B in FIG. 1 at a side of a foundation of a containment.

### Description of Embodiments

Exemplary embodiments of a foundation for a building in a nuclear facility and a nuclear facility according to the present invention will be explained below in detail with reference to the accompanying drawings. The present invention is not limited to the embodiments. In addition, constituent elements in the following embodiment include those that can be easily replaced by persons skilled in the art, or that are substantially equivalent. Embodiment

A foundation according to an embodiment of the present invention serves as a base of a building in a nuclear facility, and includes a seismic isolator. While examples of the building in the nuclear facility include a containment and a reprocessing facility of nuclear fuel, a case where a containment and an auxiliary building are applied as the building in the nuclear facility is explained below.

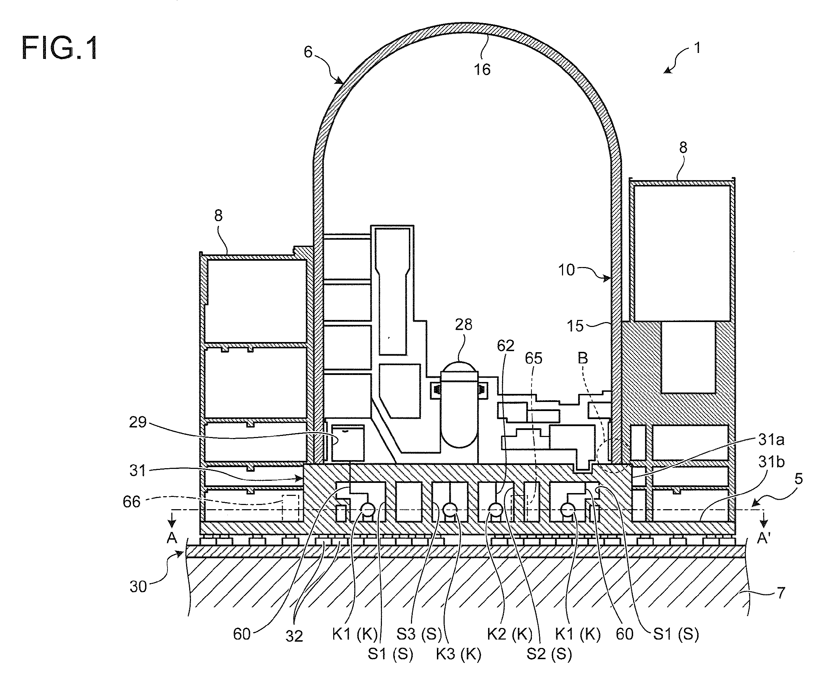

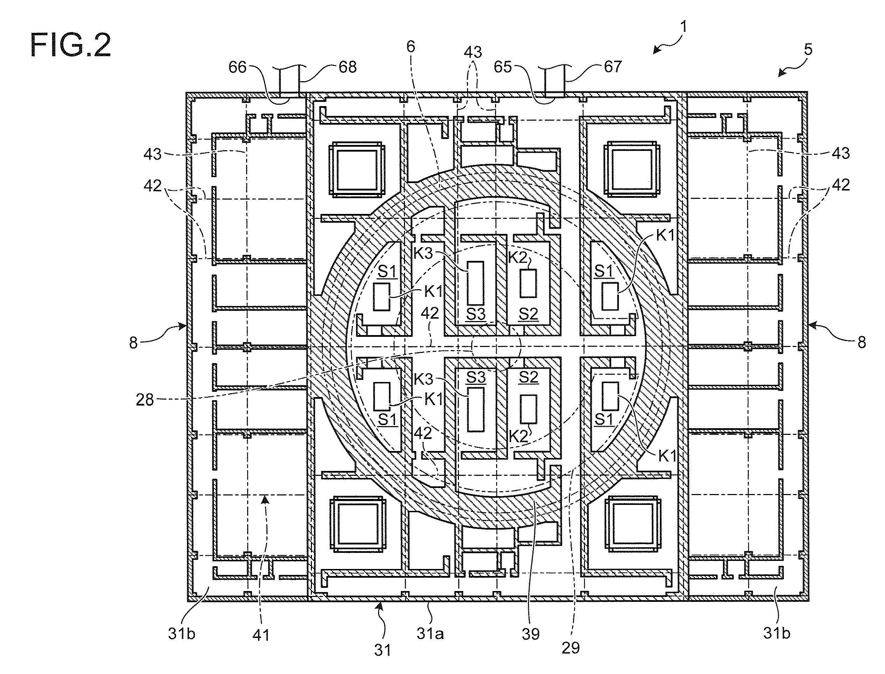

FIG. 1 is a sectional view of a nuclear facility to which the foundation according to the present embodiment is applied, where the nuclear facility is viewed from a side thereof. FIG. 2 is a sectional view of the foundation shown in FIG. 1 as being cut along a line A-A' . As shown in FIG. 1, a nuclear facility 1 includes a foundation 5 provided on a ground 7, a containment 6 provided on the foundation 5, and two auxiliary buildings 8 provided so as to put the containment 6 therebetween. As shown in FIG. 2, the foundation 5 is formed in a rectangular shape as viewed in a plan view, and the containment 6 is arranged at the center of the foundation 5. The two auxiliary buildings 8 are arranged at the opposite ends (right and left ends in FIG. 2), while putting the containment 6 therebetween.

The containment 6 is integrally constituted by a cylindrical part 15 installed on the foundation 5 and a dome 16 arranged on the cylindrical part 15. The cylindrical part 15 is formed in a cylindrical shape, and is formed straight from a side of the foundation 5 toward a side of the dome 16. The dome 16 is formed in a hemispherical shape.

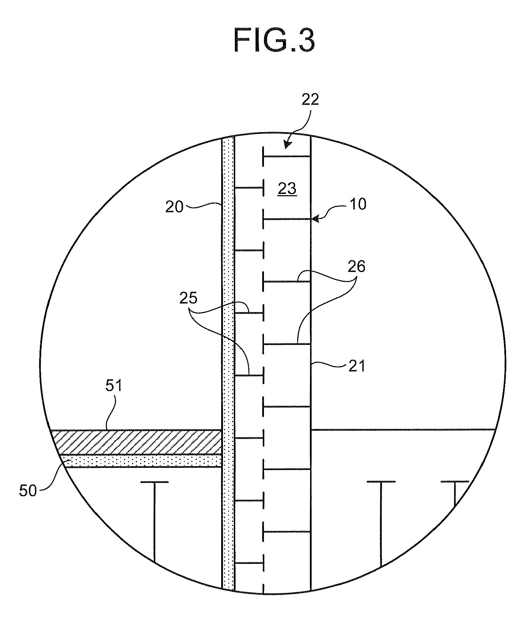

FIG. 3 is a partial sectional view of an area surrounded by a dotted line B in FIG. 1 at a side of a foundation of a containment. As shown in FIG. 3, a wall 10 of the containment 6, that is, walls 10 of the cylindrical part 15 and the dome 16 include a liner plate 20 serving as an inner wall, an outer-wall steel plate 21 serving as an outer wall, and a containment-side hull structure unit 22 attached to the inner wall side of the outer-wall steel plate 21. Concrete 23 is cast between the liner plate 20 and the outer-wall steel plate 21.

The liner plate 20 is constituted by a steel plate and is provided on the entire inner surface of the containment 6 so that the inside of the containment 6 can be kept airtightly. A plurality of liner anchors 25 arranged in a matrix are attached to the outer wall side of the liner plate 20. With this configuration, the liner anchors 25 can favorably fix the liner plate 20 to the concrete 23 without causing separation of the liner plate 20 from the concrete 23.

The outer-wall steel plate 21 is constituted by a steel plate similarly to the liner plate 20, and the containment-side hull structure unit 22 is attached by welding to the inner wall side of the outer-wall steel plate 21. The containment-side hull structure unit 22 is formed in a reticular pattern by a plurality of horizontal reinforcing ribs 26 arranged to extend in a horizontal direction, and a plurality of vertical reinforcing ribs (not shown) arranged to extend in a vertical direction. The horizontal reinforcing ribs 26 and the vertical reinforcing ribs are constituted by using steel plates formed in a T-shape in cross section.

As shown in FIG. 1, a primary cooling system including a reactor 28 is accommodated in the containment 6 formed as described above. The reactor 28 is a pressurized water reactor (PWR) that uses light water as a reactor coolant and a neutron moderator, makes the light water as high-temperature and high-pressure water that does not boil over an entire reactor core, feeds the high-temperature and high-pressure water to a steam generator to generate steam by heat exchange, and then feeds the steam to a turbine generator to generate power. The containment 6 is provided with a water storage pit 29 capable of storing cooling water, which is used at the time of replacing nuclear fuel. As shown in FIG. 2, the reactor 28 is provided at the center of the containment 6, and the water storage pits 29 are provided to surround the reactor 28.

The auxiliary buildings 8 are explained next with reference to FIGS. 1 and 2. The auxiliary buildings 8 are installed on the foundation 5 to be adjacent to the containment 6. In each of the auxiliary buildings 8, a control room for controlling the nuclear facility 1 and a fuel handling room for replacing nuclear fuel in the reactor 28 are provided.

The foundation 5 arranged on the ground 7 is explained next. The foundation 5 is as large as that, for example, the length in the horizontal direction and the length in the vertical direction in a horizontal plane are 80 meters to 120 meters. The foundation 5 is constituted such that the containment 6 described above can be installed thereon. The foundation 5 is constituted by a lower foundation 30 arranged on the ground 7, an upper foundation 31 arranged vertically above the lower foundation 30 with a gap, and a plurality of seismic isolators 32 provided between the lower foundation 30 and the upper foundation 31.

The lower foundation 30 is a reinforced concrete structure (RC structure) having reinforcing steel incorporated therein. The lower foundation 30 is constructed in a square shape or a rectangular shape so that the surface (an upper surface) thereof becomes flat on the ground 7, which is made to be flat.

The seismic isolator 32 has a well-known configuration and is provided between an upper surface of the lower foundation 30 and a lower surface of the upper foundation 31. The seismic isolator 32 has a multilayer seismically-isolated structure in which a disk-like rubber material and a disk-like steel plate are alternatively stacked, and is arranged in a manner that a lower side of the seismic isolator 32 is fixed to the upper surface of the lower foundation 30, and an upper side thereof is fixed to the lower surface of the upper foundation 31.

The upper foundation 31 is a steel-plate reinforced concrete structure (SC structure) having a foundation-side hull structure unit 41 incorporated therein. The upper foundation 31 is integrally constituted by a lower block 31b facing the lower foundation 30 via the plurality of seismic isolators 32 and an upper block 31a provided on an upper part of the lower block 31b. The lower block 31b is formed in a rectangular shape so that a back surface (a lower surface) thereof becomes flat. The upper block 31a is formed in a rectangular shape, and is provided at the center of the lower block 31b so as to protrude upward from an upper surface of the lower block 31b. That is, the upper foundation 31 is formed as a stepped foundation where the center thereof is high and the opposite ends thereof are low.

Furthermore, the foundation-side hull structure unit 41 described above, a containment base 39 serving as a base of the containment 6, and a plurality of machine rooms S capable of accommodating a machine K used in the nuclear facility 1 are provided in the upper foundation 31, that is, in the upper block 31a.

The containment base 39 is annularly provided along the containment 6 arranged thereon (see FIG. 2). The thickness of the containment base 39 in a radial direction is thicker than the thickness of the wall 10 of the containment 6. As shown in FIG. 3, a base end of the containment 6 is fitted into the inside of the containment base 39.

Furthermore, a bottom liner plate 50 is provided on a bottom face inside the containment 6, that is, on an upper surface of the upper foundation 31 (the upper block 31a) surrounded by the containment 6. The bottom liner plate 50 is provided over the entire area of the bottom face of the containment 6, and is airtightly joined to the liner plate 20 provided on the inner wall of the containment 6 by welding. With this configuration, the inside of the containment 6 is covered with the liner plate 20 and the bottom liner plate 50, thereby keeping the inside of the containment 6 airtight. Further, a grout 51 serving as a floor surface in the containment 6 is formed on the bottom liner plate 50 by casting concrete.

As shown in FIG. 2, the foundation-side hull structure unit 41 incorporated in the upper foundation 31 is formed in a reticular pattern in a horizontal plane by a plurality of horizontal reinforcing ribs 42 (first reinforcing ribs) extended in a lateral direction (the horizontal direction in FIG. 2) and a plurality of vertical reinforcing ribs 43 (second reinforcing ribs) extended in a vertical direction (the upward/downward direction in FIG. 2) so as to be orthogonal to the horizontal reinforcing ribs 42. Each of the horizontal reinforcing ribs 42 and each of the vertical reinforcing ribs 43 are constituted by using steel plates formed in a T-shape in cross section. In this case, a plurality of spaces in the foundation separated by the respective horizontal reinforcing ribs 42 and the respective vertical reinforcing ribs 43 are provided in the upper block 31a. The plurality of machine rooms S described above are formed in the separated spaces in the foundation. Therefore, a part of the horizontal reinforcing ribs 42 and the vertical reinforcing ribs 43 is used as a wall for dividing the machine rooms S. In this case, the machine rooms S are provided outside of the liner plate 20 and the bottom liner plate 50 that airtightly cover the inside of the containment 6.

The respective machine rooms S configured as described above can accommodate therein various kinds of machines K. In this case, as the machine K arranged in each of the machine rooms S, an appropriate machine is arranged according to the positions of the reactor 28 and the water storage pit 29 arranged in the containment 6. Specifically, as shown in FIG. 2, a lifting pump is respectively provided as a machine K1 in the upper and lower two machine rooms S1 arranged on one side in the lateral direction (the left side in FIG. 2) and the upper and lower two machine rooms S1 arranged on the other side in the lateral direction (the right side in FIG. 2) in the containment base 39. The lifting pump K1 supplies cooling water to a facility (not shown) provided in an upper part of the containment 6. Therefore, four machine rooms S1 in total are respectively used as the pump rooms S1.

The respective pump rooms S1 are positioned immediately below the water storage pit 29. The water storage pit 29 is connected to an inlet side of the lifting pump K1 arranged in the pump rooms S1 via an inflow-side connecting pipe (first connecting pipe) 60. With this configuration, because the lifting pump K1 is arranged in the machine rooms S1 positioned immediately below the water storage pit 29, the inflow-side connecting pipe 60 can be made short, and an arrangement configuration of pipes can be simplified. The facility is connected to an outlet side of the lifting pump K1 via an outflow-side connecting pipe (not shown).

Accordingly, when cooling water flown out from the water storage pit 29 is fed to the lifting pump K1 via the inflow-side connecting pipe 60, the lifting pump K1 supplies the fed cooling water to the facility in the upper part of the containment 6 via the outflow-side connecting pipe.

As shown in FIG. 2, as described above, an appropriate machine K is arranged in other machine rooms S in the containment base 39 corresponding to the position of a facility arranged in the containment 6. To briefly explain this arrangement, a feeding pump K2 is provided as the machine K in two central machine rooms S2, respectively. The feeding pump K2 supplies cooling water to the reactor 28. Therefore, the two machine rooms S2 are respectively used as the pump room S2. The reactor 28 is connected to an outflow side of the pump K2 via an outflow-side connecting pipe (second connecting pipe) 62. With this configuration, because the feeding pump K2 is arranged in the machine rooms S2 positioned below the reactor 28, the outflow-side connecting pipe 62 can be made short, and thus the arrangement configuration of pipes can be simplified.

Furthermore, as shown in FIG. 2, a cooler K3 is respectively provided as the machine K in two central machine rooms S3. Therefore, the two machine rooms S3 are respectively used as the cooling room S3.

A machine room passage 67 for intercommunicating with outside of the foundation 5 via a machine room entrance 65 is provided in the machine rooms S constituted as described above, while communicating with the upper block 31a of the upper foundation 31. An auxiliary building passage 68 for intercommunicating with outside of the auxiliary building 8 via an auxiliary building entrance 66 is provided in a machine room located at the bottom of the auxiliary building 8 provided on the lower block 31b, while communicating with the auxiliary building 8. Furthermore, the machine room passage 67 and the auxiliary building passage 68 are provided continuously, thereby enabling intercommunication between the machine rooms S provided in the upper foundation 31 and machine rooms provided in the auxiliary building 8.

Seismic isolation designing at the time of constructing a building such as the containment 6 and the auxiliary building 8 above the foundation 5 described above is explained below. When the seismic isolation designing is made, because large vibrations are generated from the upper surface of the foundation 5, the building is designed by taking into consideration matters such as how high a barycenter of the building provided on the foundation 5 is and how much mass is at the barycenter of the building. In this case, because the machine room S is provided on the foundation 5, it is unnecessary to take large vibrations into consideration.

According to the above configuration, in the nuclear facility 1, it is possible to reduce the size of the auxiliary building 8 because the machine room S is provided in the upper foundation 31. Furthermore, because the machine room S does not need to be provided in the containment 6 as in conventional techniques, the height of the containment 6 does not need to be increased for providing the machine room S. Consequently, because the height of the containment 6 does not need to be changed, higher seismic isolation performance can be ensured. As a result, in the nuclear facility 1, the size of the auxiliary building 8 can be reduced while ensuring the seismic isolation performance.

In the upper foundation 31, the machine room S can be provided in a space separated by the horizontal reinforcing ribs 42 and the vertical reinforcing ribs 43. Therefore, the machine room S can be provided without degrading the structural strength of the upper foundation 31 acquired by the foundation-side hull structure unit 41.

By forming the lower surface of the upper foundation 31 flat, replacement of the seismic isolator 32 can be made easily, and the workload at the time of replacing a plant (a nuclear facility) can be reduced.

Because the lifting pump K1 can be arranged in the machine room S1 immediately below the water storage pit 29, cooling water stored in the water storage pit 29 can favorably flow out to the lifting pump K1. Furthermore, because the inflow-side connecting pipe 60 connecting between the water storage pit 29 and the lifting pump K1 can be made short, the arrangement configuration of pipes can be simplified.

The machine room S can be formed outside of the containment 6 covered with the liner plate 20 and the bottom liner plate 50. Therefore, when the pressure inside the containment 6 increases, it is possible to suppress the possibility such that the air inside the containment flows into the machine room S.

### Industrial Applicability

As described above, the foundation for a building in a nuclear facility and the nuclear facility according to the present invention are useful for a foundation that serves as a base of a containment, and are particularly suitable for a case when they are applied for an upper foundation having a hull structure unit incorporated therein.

### Reference Signs List

- 1: nuclear facility
- 5: foundation
- 6: containment
- 7: ground
- 8: auxiliary building
- 20: liner plate
- 22: containment-side hull structure unit
- 28: reactor
- 29: water storage pit
- 30: lower foundation
- 31: upper foundation
- 32: seismic isolator
- 39: containment base
- 41: foundation-side hull structure unit
- 42: horizontal reinforcing rib
- 43: vertical reinforcing rib
- 50: bottom liner plate
- 51: grout
- 60: inflow-side connecting pipe
- 62: outflow-side connecting pipe
- S: machine room
- S1: pump room
- S2: pump room
- S3: cooling room
- K: machine
- K1: lifting pump
- K2: feeding pump
- K3: cooler

## Claims

1. A foundation for a building in a nuclear facility, comprising:
a lower foundation provided on a ground; and
an upper foundation provided above the lower foundation via a seismic isolator, wherein
a machine room in which a machine can be arranged is provided in the upper foundation.

2. The foundation for a building in a nuclear facility according to claim 1, wherein
a hull structure unit that is configured in a reticular pattern by first reinforcing ribs extended in one direction and second reinforcing ribs extended to cross the first reinforcing ribs is provided in the upper foundation, and
the machine room is provided in a space in a foundation separated by the first reinforcing ribs and the second reinforcing ribs.

3. The foundation for a building in a nuclear facility according to claim 1 or 2, wherein a lower surface of the upper foundation is flat in its entirety.

4. A nuclear facility comprising:
the foundation for a building in a nuclear facility according to any one of claims 1 to 3; and
a containment that serves as a building provided on the upper foundation.

5. The nuclear facility according to claim 4, wherein
a water storage pit capable of storing cooling water is provided in the containment,
a lifting pump capable of pumping the cooling water flown out from the water storage pit is provided as the machine in the machine room positioned below the water storage pit, and
a first connecting pipe that connects the water storage pit and the lifting pump is further provided.

6. The nuclear facility according to claim 4 or 5, wherein
a reactor is provided in the containment,
a feeding pump capable of feeding cooling water to the reactor is provided as the machine in the machine room positioned below the reactor, and
a second connecting pipe that connects the reactor and the feeding pump is further provided.

7. The nuclear facility according to any one of claims 4 to 6, wherein
a liner plate that covers an inner surface of an internal space separated by the upper foundation and the containment is provided in the containment, and
the machine room is located outside the liner plate.
